# EUROPEAN PATENT APPLICATION

(11) **EP 1 621 083 A1**
(43) Date of publication of application: **01.02.2006**
(21) Application number: 04731382.0
(22) Date of filing: 06.05.2004
(51) Int. Cl.: A23L 1/216, A23L 3/3418, A23B 7/148, A23B 7/152, B65D 81/34

(54) **METHOD OF PREPARING AND PACKAGING A FRESH FOOD PRODUCT FOR THE PRESERVATION AND SUBSEQUENT STEAM COOKING THEREOF, AND CORRESPONDING PACKAGING CONTAINER**

(30) Priority: 08.05.2003 ES 200301048
(71) Applicant: Agroinnova, S.L., 47100 Tordesillas (Valladolid) (ES)
(72) Inventor: MELENDEZ JUAREZ, José Manuel, E-47004 Valladolid (ES); MELENDEZ JUAREZ, Francisco Javier, E-49800 Toro (Zamora) (ES); MELENDEZ LAGUNA, Rafael, E-47112 Pedrosa del Rey (Valladolid) (ES); JUAREZ QUINTANA, Ma Consuelo, 47002 Valladolid (ES)
(74) Representative: Ungria Lopez, Javier
(86) International application number: PCT/ES2004/000201
(87) International publication number: WO 2004/098317

(57) **Abstract**

The process is based on vacuum packaging a fresh food product such as unpeeled potatoes (3), sealing the package (1) by a transparent film barrier (2), film which and the package (1) are comprised of a material suitable to endure high temperatures and pressures, such as those that are reached when cooking the food product (3) in a microwave oven. The film (2) fastened by heat welding on a perimetric flap (4) of the package (1), has longitudinal valves (5) in order for the steam to come out during cooking. The food product or raw potatoes (3) are washed with ozonized water, before packaging them, allowing the preservation thereof without chemicals and permitting steaming due to the fact that said product or potatoes (3) are packaged with a certain minimum degree of moisture, since what really permits the cooking phenomenon is the moisture itself of the product, in the present case the potatoes that has been 80 and 85% moisture.

## Description

### OBJECT OF THE INVENTION

As expressed in the title of this specification, the present invention refers to a process for preparing and packaging a fresh food product for preservation and subsequent steaming, for example in a microwave oven. This process is foreseen to be preferably applied in the packaging of fresh food products, such as unpeeled or peeled raw potatoes, in some special conditions so that same may be preserved without losing any qualities and so that cooking may be done at any time in a microwave oven. The product is kept hermetically sealed during the time it is on the market, in other words, since it is packaged until the final cooking is done thereof. This cooking will be done due to the high moisture itself of the product.

Another object of the invention is the corresponding package wherein the fresh food product is packaged for preservation and subsequent cooking thereof.

The process is applicable to other horticultural products, as long as their degree of moisture is high.

### BACKGROUND OF THE INVENTION

There are food products that are marketed in a package, either precooked, raw and even totally cooked, in such a way that in all cases the product is hermetically sealed inside the package, with a modified atmosphere apt for preservation of the food product.

There are packages that may be heated with the product contained therein, as well as packages that endure microwave ovens so that the product may be heated or cooked.

There is a certain type of package that contains a semi-cooked or even fresh product, that may be cooked in a microwave oven, in such a way that in order to keep all the qualities of the product during its shelf life (from when it is packaged until it is cooked or eaten), the package has the particularity that is provided with a false bottom. Between both bottoms a separation or chamber wherein a spongy material with a certain amount of water is defined, in such a way that when heating takes place in a microwave oven, the steam produced rises from the spongy material and through the holes made for this purpose in the top or inside bottom, passes to the area of the package where the product is stored, and consequently the product is steamed.

The inconvenience that this system for packaging and preserving the product has, lies in the complexity of the package, since it must have a false bottom, as well as contain the spongy material, which gives rise to problems when same is manufactured, given that it is necessary to put said material between both bottoms, as well as to conveniently attach these bottoms, all of which is achieved by means of delicate and expensive processes.

On the other hand, it is necessary to use preservatives and other agents to manage to preserve the food product in optimum condition without spoiling.

### DESCRIPTION OF THE INVENTION

The purpose of the process that is proposed is to achieve packaging of a fresh food product in some optimum preservation conditions, without the need of any type of additives or agents, and that said fresh food product can be cooked after a certain amount of time in a microwave oven in the very package itself.

In this sense, the process of the invention is conceived for preparing and packaging fresh food products with a high degree of moisture, such as unpeeled or peeled potatoes, based on the fact that the water used to wash the product is ozonized with a suitable concentration, introducing the product with a minimum amount of moisture in a package that is hermetically sealed, subjecting said package to a vacuum and then introducing an inert atmosphere of CO₂ and NO₂ or CO₂ and Ar, all without the need of any additives or preservatives.

The package wherein the packaging takes place is made of a material, such as polypropylene, with a single bottom and with some characteristics such as enduring the high temperatures and pressures which the package will be subjected to when the product is cooked. Said package is hermetically sealed by means of transparent film, that also endures high temperatures and pressures. The film is attached to the package by heat welding or another similar system, on a perimetric flap corresponding to the mouth thereof.

As far as the material of the package is concerned, it will be very resistant to acids, oils, fats and hydrocarbons, and it will also have good sealability, the possibility of being pasteurized and sterilized and it proves to be suitable to be cooked in a microwave oven.

On its part, the film sealing of the cited package will have one or more longitudinal valves that remain initially closed but they open when the package has pressure inside it. Same opens as a result of the film slightly separating from the ends where the sealing is produced. These areas correspond precisely to the valves through which part of the steam may come out when the product is heated and correspondingly cooked.

There is also the possibility that the sealing of the package is done with microperforated film that consists of attaching two films, defining a barrier so that the package is totally airtight, in such a way when a certain pressure is reached inside the package, said two films will slightly separate and the steam will come out through small pores defined by the microperforation.

There are numerous advantages derived from the process for packing, preserving and subsequent cooking of fresh food products such as potatoes, among which the following may be cited:
- Optimum hygiene of the product is achieved, since ionization involves disinfecting, oxygenizing and deodorizing thereof.
- After cooking, the product is preserved and all the vitamins and organoleptic characteristics are kept.
- As to the package itself, same has characteristics of hermetic welding, controlled moisture, flexibility to endure high pressures, handling resistance and controlled temperature.
- Likewise, the package permits the product contained inside to be seen, which proves to be practical and provides some optimum hygienic-sanitary conditions.
- The product has a clean appearance, as long as the film is put duly in place, offering a good season appearance to the shelf life of the product, and prolonged preservation.
- In connection with consumers, bad smells in the kitchen after cooking will be avoided and all the nutritional properties will be kept after said cooking. Hence, the food item is healthy and may even be eaten out of the package itself where cooking has taken place. The cooking may be done easily and rapidly.

### BRIEF DESCRIPTION OF THE DRAWINGS

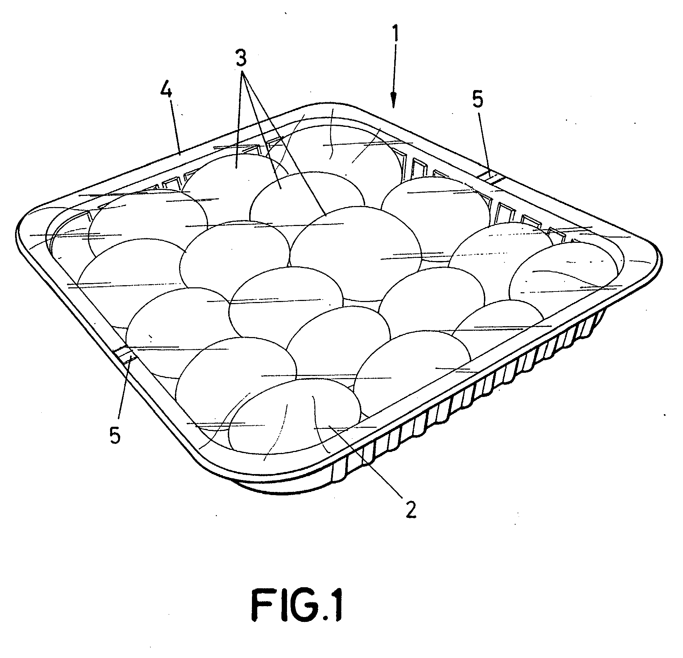

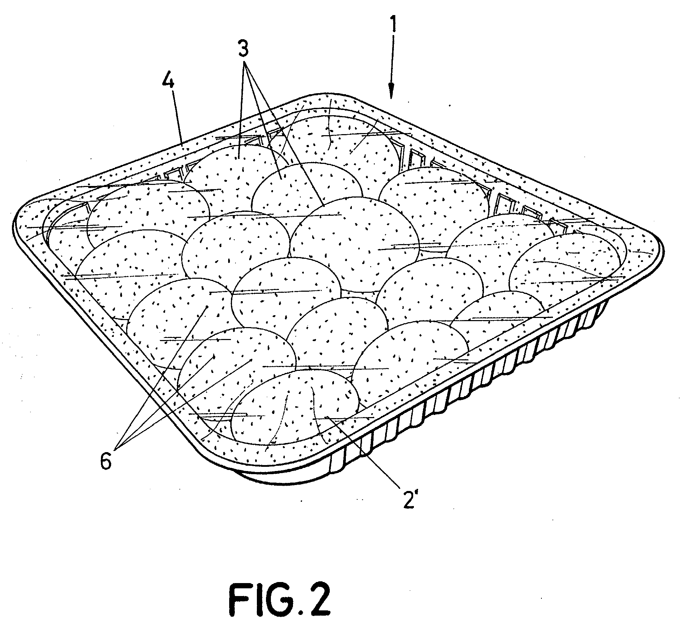

In order to complete the description that is going to be made hereinafter and for the purpose of providing a better understanding of the characteristics of the invention, a set of drawings wherein, in figure 1 a perspective view of the package containing fresh potatoes has been represented, is attached hereto, whereas figure 2 shows the same thing with microperforated film, all made in accordance with the process of the invention.

### PREFERRED EMBODIMENT OF THE INVENTION

As one can see in the cited figures, the object of the invention comprises packaging a fresh food product for preservation thereof during the marketing thereof and to allow the product to be steamed, for which purpose a package (1) that may have any suitable geometric shape and that is sealed at the top by means of film (2) has been provided for. This sealing or any other appropriate closing system to contain the fresh food product (3), which in the represented case are unpeeled potatoes, in such a way that the film (2) is attached to the body of the package (1) over a perimetric flap (4) provided for on the package.

The food product or fresh potatoes (3) are washed with ozonized water and inserted into the package that is hermetically sealed with film (2). The vacuum is produced and then CO₂ and N₂ or else CO₂ and Ar are applied, which permits preservation thereof for a long period of time. Then the product may be steamed and this operation may be carried out in a microwave oven. The product is placed and sealed hermetically in said package (1). The steaming is carried out as a result of the water contained in the product evaporating due to the heating and the product is cooked. One or several longitudinal valves (5) provided for in the film allow the steam to come out. These valves are formed as a result of the fact that in certain areas wherein the film is attached, there are cuts and the film is detached from the flap (4) of the package (1). Some minute openings are produced in order to allow the cited steam to come out.

In a variation of the embodiment shown in figure 2, the sealing film (2') is microperforated, the microperforations (6) allowing the steam to come out during cooking.

In either of the two embodiments of the package or sealing film (2) or (2'), the process of the invention permits the product to be cooked without becoming dehydrated, thus preventing the product from drying out, as it conventionally happens.

Besides, the dietetic, hygienic and organoleptic qualities are preserved better, since the product keeps all the volatile and water-soluble substances, above all, the aromatic components.

## Claims

1. Process for preparing and packaging a fresh food product for preservation and subsequent steaming thereof, **characterized in that** it comprises the following operative steps:
- washing the food product by injecting ozone into the water used for washing;
- Inserting the washed food product, with a minimum degree of moisture, into a package;
- sealing the package contain the product with transparent film provided with one or more steam releasing valve or valves;
- subjecting the package to a vacuum;
- introducing the product in the package with an inert atmosphere of CO₂ and N₂ or else CO₂ and Ar.

2. Process for preparing and packaging a fresh food product for preservation and subsequent steaming thereof, according to claim 1, **characterized in that** the fresh food product is preferably unpeeled or peeled potatoes.

3. Process for preparing and packaging a fresh food product for preservation and subsequent steaming thereof, according to claim 1, **characterized in that** the injecting of ozone into the washing water is done in a controlled manner with a total absence of chemicals.

4. Process for preparing and packaging a fresh food product for preservation and subsequent steaming thereof, according to the preceding claims, **characterized in that** the fresh product has a high degree of moisture, preferably between 80 and 85%.

5. Package for a fresh food product, that is preferably and basically for vacuum packaging a fresh product such as fresh peeled or unpeeled potatoes, according to the process of the preceding claims, wherein the package (1) itself is sealed by means of film (2 or 2') to achieve that the packaged product is preserved in optimum conditions during the marketing period, allowing subsequent cooking of the product in a microwave oven inside the unopened package itself, **characterized in that** the sealing film (2) includes one or two longitudinal valves (5) to allow the steam produced during cooking to come out of the fresh product (3) contained in the package (1).

6. Package for a fresh food product, according to claim 5, **characterized in that** the sealing film (2') has a plurality of microperforations (6) and overlying other film in order to allow the steam produced during cooking to come out of the fresh product (3) contained in the package (1) .
